# EUROPÄISCHE PATENTANMELDUNG

(11) **EP 3 950 485 A1**
(43) Veröffentlichungstag der Anmeldung: **09.02.2022**
(21) Anmeldenummer: 21183904.8
(22) Anmeldetag: 06.07.2021
(51) Int. Cl.: B62M 25/08, B62M 6/45

(54) **ANTRIEBSVORRICHTUNG FÜR EIN FAHRRAD UND VERFAHREN ZUR STEUERUNG DER ANTRIEBSVORRICHTUNG**

(30) Priorität: 05.08.2020 DE 102020209844
(71) Anmelder: ZF Friedrichshafen AG, 88046 Friedrichshafen (DE)
(72) Erfinder: Doerr, Ulrich, 78467 Konstanz (DE); Margraf, Christoph, 88677 Markdorf (DE); Riedisser, Thomas, 88138 Sigmarszell (DE); Ziemer, Peter, 88069 Tettnang (DE); Doepfert, Hagen, 88131 Lindau (DE)
(74) Vertreter: ZF Friedrichshafen AG

(57) **Zusammenfassung**

Die Erfindung betrifft eine Antriebsvorrichtung für ein zumindest mit Muskelkraft angetriebenes Fahrrad, umfassend eine automatisierte Schalteinrichtung (1) mit einem Aktuator (8) und mit einer Schaltwalze (9) sowie ein Tretlagergetriebe (3), dessen Übersetzung mittels der Schalteinrichtung (1) automatisiert einstellbar ist, wobei das Tretlagergetriebe (3) dazu eingerichtet ist, zumindest mit einem Antriebsdrehmoment von einem Benutzer über mindestens eine mit einer Tretkurbelwelle (4) wirkverbundene Tretkurbel (5) beaufschlagt zu werden, ferner umfassend eine Auswerte- und Steuereinrichtung (6) sowie eine Sensorik (7), wobei die Sensorik (7) dazu eingerichtet ist, zumindest antriebsspezifische Sensordaten zu generieren und an die Auswerte- und Steuereinrichtung (6) zu übermitteln, wobei die Auswerte- und Steuereinrichtung (6) dazu eingerichtet ist, die Schalteinrichtung (1) zumindest in Abhängigkeit der antriebsspezifischen Sensordaten automatisiert anzusteuern. Ferner betrifft die Erfindung ein Verfahren zur Steuerung der Antriebsvorrichtung sowie ein Fahrrad mit einer solchen Antriebsvorrichtung.

## Beschreibung

Die Erfindung betrifft eine Antriebsvorrichtung für ein zumindest mit Muskelkraft angetriebenes Fahrrad sowie ein Verfahren zur Steuerung einer solchen Antriebsvorrichtung. Ferner betrifft die Erfindung auch ein Fahrrad mit einer solchen Antriebsvorrichtung.

Beispielsweise ist aus der EP 2 862 788 A1 eine Steuereinheit zur Verwendung in einem von einem Fahrer bzw. Benutzer antreibbaren Fahrrad bekannt. Das Fahrrad umfasst eine elektrische Antriebseinheit, eine durch Muskelkraft betreibbare mechanische Antriebseinheit, und mindestens ein durch mindestens ein Schaltmittel schaltbares Getriebe. Die Steuereinheit ist dazu ausgebildet, das Schaltmittel und die elektrische Antriebseinheit zu steuern. Das schaltbare Getriebe ist dazu ausgebildet, ein von dem Benutzer auf die mechanische Antriebseinheit aufgebrachtes erstes Drehmoment in ein zweites Drehmoment umzusetzen. Das Fahrrad ist unter Wirkung des zweiten Drehmoments und eines von der elektrischen Antriebseinheit aufgebrachten dritten Drehmoments bewegbar.

Die Aufgabe der vorliegenden Erfindung besteht darin, eine besonders komfortable Antriebsvorrichtung für ein zumindest mit Muskelkraft angetriebenes Fahrrad sowie ein besonders komfortables Verfahren zum Betreiben der Antriebsvorrichtung zu schaffen. Die Aufgabe wird gelöst durch die Gegenstände der unabhängigen Patentansprüche 1 und 11. Vorteilhafte Ausführungsformen sind Gegenstand der Unteransprüche, der folgenden Beschreibung sowie der Figuren.

Eine erfindungsgemäße Antriebsvorrichtung für ein zumindest mit Muskelkraft angetriebenes Fahrrad umfasst eine automatisierte Schalteinrichtung mit einem Aktuator und mit einer Schaltwalze sowie ein Tretlagergetriebe, dessen Übersetzung mittels der Schalteinrichtung automatisiert einstellbar ist, wobei das Tretlagergetriebe dazu eingerichtet ist, zumindest mit einem Antriebsdrehmoment von einem Benutzer über mindestens eine mit einer Tretkurbelwelle wirkverbundene Tretkurbel beaufschlagt zu werden. Die erfindungsgemäße Antriebsvorrichtung umfasst ferner eine Auswerte- und Steuereinrichtung sowie eine Sensorik, wobei die Sensorik dazu eingerichtet ist, zumindest antriebsspezifische Sensordaten zu generieren und an die Auswerte- und Steuereinrichtung zu übermitteln, wobei die Auswerte- und Steuereinrichtung dazu eingerichtet ist, die Schalteinrichtung zumindest in Abhängigkeit der antriebsspezifischen Sensordaten automatisiert anzusteuern.

Mit anderen Worten betätigt bzw. verschiebt der Aktuator der Schalteinrichtung die Schaltwalze der Schalteinrichtung, um darüber die Übersetzung des Tretlagergetriebes zu verändern. Vorzugsweise ist der Aktuator elektrisch und wird über einen elektrischen Speicher mit elektrischer Energie versorgt. Für die Einstellung bzw. Änderung einer Übersetzung am Tretlagergetriebe werden Steuerbefehle von der Auswerte- und Steuereinrichtung an die Schalteinrichtung übermittelt, sodass diese dadurch automatisiert betrieben wird. Die Steuerbefehle werden von der Auswerte- und Steuereinrichtung zumindest aus den antriebsspezifischen Sensordaten generiert. Die Sensorik erfasst zumindest die antriebsspezifischen Sensordaten, beispielsweise eine Antriebs- und eine Abtriebsdrehzahl, ein Antriebs- und ein Abtriebsdrehmoment, eine Geschwindigkeit des Fahrrades, eine Lage des Fahrrades etc. Mittels zumindest der antriebsspezifischen Sensordaten wird die Schalteinrichtung von der Auswerte- und Steuereinrichtung automatisiert betrieben, sodass ein Eingriff des Benutzers, also des Fahrers bzw. des Fahrradfahrers, zur Einstellung der Übersetzung obsolet ist. Dies erhöht insbesondere den Komfort für den Benutzer. Neben der Entlastung des Benutzers hinsichtlich der Wahl bzw. Einstellung der Übersetzung durch die Auswerte- und Steuereinrichtung wird ferner auch eine Überlastung von Getriebeteilen und anderen Komponenten der Antriebsvorrichtung und des Fahrrades vermieden, weil die Schalteinrichtung das Tretlagergetriebe automatisiert mit einer unkritischen Übersetzung betreibt. Dadurch erhöht sich die Lebensdauer der im Leistungsfluss befindlichen Bauteile des Fahrrades.

Informationen über die Übersetzung des Tretlagergetriebes bzw. sogenannte Ganginformation können von der Auswerte- und Steuereinrichtung beispielsweise durch Berechnung eines Quotienten aus Antriebs- und Abtriebsdrehzahl bestimmt werden, sowie durch eine Position bzw. Lage der Schaltwalze. Vorzugsweise ist zumindest ein Sensorelement zur Erfassung der Position der Schaltwalze eingerichtet. Ferner bevorzugt ist zumindest ein Sensorelement jeweils zur Erfassung der Antriebs- und der Abtriebsdrehzahl vorgesehen. Ferner bevorzugt ist zumindest ein Sensorelement jeweils zur Erfassung des Antriebs- und des Abtriebsdrehmoments eingerichtet. Ferner bevorzugt ist zumindest ein Sensorelement jeweils zur Erfassung der Geschwindigkeit des Fahrrades vorgesehen. Ferner bevorzugt ist zumindest ein Sensorelement zur Erfassung einer Lage des Fahrrades vorgesehen.

Die Schaltwalze ist insbesondere dazu ausgebildet, eine oder mehrere Schaltklinken zu betätigen, die in Richtung der Schaltwalze vorgespannt ist bzw. sind. Dazu ist die Schaltwalze insbesondere elektrisch von der Auswerte- und Steuereinrichtung steuerbar bzw. zumindest mittelbar mittels Aktuator um dessen Längsachse drehantreibbar. Je nach Drehwinkel der Schaltwalze werden eine oder mehrere Schaltklinken derart betätigt, dass ein gewünschter Gang am Tretlagergetriebe eingestellt wird bzw. ein Gangwechsel von einer Gangstufe in eine andere Gangstufe erfolgt. Im Kontaktbereich zu den jeweiligen Schaltklinken weist die Schaltwalze eine derartige Außenumfangsgeometrie auf, die die jeweilige Schaltklinke je nach Drehwinkel der Schaltwalze relativ zur Längsachse von der Schaltwalze wegdrücken oder durch Entspannung der Vorspannungselemente eine Bewegung der Schaltklinken zur Längsachse zulassen. Anders gesagt weist die Schaltwalze in der Kontaktfläche zur jeweiligen Schaltklinke am Umfang abwechselnd verteilte Vorsprünge und Einbuchtungen auf, an denen die vorgespannten Schaltklinken bei einer Betätigung bzw. Rotation der Schaltwalze abgleiten.

Je mehr Schaltklinken die Schalteinrichtung aufweist, desto größer ist die Anzahl der möglichen Gangstufen bzw. der verschiedenen Übersetzungen des Tretlagergetriebes. Somit ist die Schaltwalze insbesondere dazu eingerichtet, eine Übersetzung des Tretlagergetriebes einzustellen. Die erforderlichen Verdrehwinkel der Schaltwalze zur Betätigung der Schaltklinken kann sowohl gleich groß als auch unterschiedlich groß gewählt werden. Dies ist in der Auswerte- und Steuereinrichtung entsprechend hinterlegt und somit bekannt. Durch die Sensorik kann zudem ein Drehwinkel der Schaltwalze bestimmt werden. Ohne Sensorik, kann die Position der Schaltwalze bestimmt werden indem beispielsweise ein Referenzpunkt angefahren wird.

Durch Bestimmung des Drehwinkels der Schaltwalze können zumindest mittelbar Information über die aktuelle Gangstufe erfasst werden. Alternativ ist denkbar, dass die Schalteinrichtung eine Ketten- oder Nabenschaltung zur Einstellung einer Gangstufe des Tretlagergetriebes umfasst, wobei die Ketten- oder Nabenschaltung dabei elektrisch oder mechanisch, beispielsweise durch einen Seilzug, betätigbar ausgebildet ist.

Gemäß einer bevorzugten Ausführungsform umfasst die Antriebsvorrichtung ferner einen elektrischen Hilfsantrieb, der dazu eingerichtet ist, das Tretlagergetriebe mit einem zusätzlichen Antriebsdrehmoment zu beaufschlagen. Der elektrische Hilfsantrieb ist als elektrische Maschine ausgebildet, umfasst einen Stator sowie einen Rotor und ist dazu eingerichtet, mit einem elektrischen Speicher verbunden zu sein. Mithin ist das Fahrrad als E-Bike bzw. Pedelec ausgebildet.

Die Antriebsvorrichtung ist beispielsweise als Mittelmotorantrieb ausgebildet, wobei die Summe aus einem über die Tretkurbelwelle von dem Benutzer mechanisch eingebrachten ersten Antriebsdrehmoment und aus einem zweiten Antriebsdrehmoment, das mittels des elektrischen Hilfsantriebs eingebracht wird, ein Gesamtantriebsdrehmoment ergibt, welches über das Tretkurbelgetriebe beispielsweise über ein Ritzel und eine Antriebskette zu wenigstens einem Hinterrad des Fahrrads weitergeleitet wird, um das Fahrrad entsprechend fortzubewegen. Das Gesamtantriebsdrehmoment besteht somit aus einem aus Muskelkraft mechanisch eingebrachten Antriebsdrehmoment sowie aus einem Motordrehmoment des elektrischen Hilfsantriebs.

Die Auswerte- und Steuereinrichtung bewertetet über die von der Sensorik bereitgestellten Sensorsignale, welche menschliche Leistung und welche elektrische Leistung zur Verfügung steht und berechnet daraus eine Übersetzung, die am Tretlagegetriebe eingestellt werden soll. Insbesondere sind unterschiedliche Schaltprogramme in der Auswerte- und Steuereinrichtung hinterlegt. Vorzugsweise werden die Schaltprogramme je nach Einsatzzweck und/oder Benutzerpräferenzen gewählt.

Beispielsweise kann mit einem Wirkungsgrad optimierten Schaltprogramm oder mit einer Schaltpunktempfehlung zusätzliche Reichweite für einen zumindest teilweise elektrischen Betrieb des Fahrrades erzielt werden. Bei Mittelmotoren ist der Wirkungsgrad bei niedriger Trittfrequenz und hoher Last vergleichsweise niedrig. Beispielsweise kann eine höhere Trittfrequenz je nach Auslegung bis zu 40% Wirkungsgradsteigerung erzielen, sodass der Antrieb effizienter wird. Daraus resultiert die Möglichkeit der Reduzierung einer Speicherkapazität des elektrischen Speichers, wodurch insbesondere Kosten und Gewicht gesenkt werden können.

Ferner ist es vorteilhaft, wenn in Kombination mit dem Rekuperieren, also der Rückgewinnung von Energie durch Umwandlung von kinetischer Energie in elektrische Energie unter Verzögerung des Fahrrades, automatisch eine Rückschaltungen also eine Veränderung der Übersetzung am Tretlagergetriebe derart eingeleitet wird, dass die Effizienz der Rekuperation erhöht wird, und zwar in Abhängigkeit des Verzögerungsbedarfs bzw. Bremskraftbedarfs. Sofern ein hoher Verzögerungsbedarf vorliegt, beispielsweise wenn das Fahrrad von einer hohen Geschwindigkeit zum Stillstand gebracht werden soll, wird über den elektrischen Hilfsantrieb und/oder über die Übersetzung am Tretlagergetriebe ein größeres Rekuperationsmoment eingestellt. Sofern ein niedriger Verzögerungsbedarf vorliegt, beispielsweise dann, wenn die Geschwindigkeit des Fahrrades an einer Hangabfahrt konstant gehalten werden soll, wird über den elektrischen Hilfsantrieb und/oder über die Übersetzung am Tretlagergetriebe ein kleineres Rekuperationsmoment eingestellt. Somit kann die Rekuperation entweder über den elektrischen Hilfsantrieb und/oder über die Übersetzung am Tretlagergetriebe bedarfsgerecht erhöht oder verringert werden. Im Rekuperationsbetrieb befindet sich der elektrische Hilfsantrieb im Generatorbetrieb.

Bevorzugt ist die Auswerte- und Steuereinrichtung dazu eingerichtet, in Abhängigkeit der antriebsspezifischen Sensordaten einen optimalen Schaltzeitpunkt zu bestimmen und die Schalteinrichtung in Abhängigkeit des optimalen Schaltzeitpunkts zu steuern.

Die Sensorik umfasst vorzugsweise Sensorelemente, die am elektrischen Hilfsantrieb angeordnet sind und das Antriebs- bzw. Eingangsdrehmoment des Hilfsantriebs und/oder die Drehzahl des Rotors oder einer damit wirkverbundenen Welle erfassen.

Ferner umfasst die Sensorik vorzugsweise auch Sensorelemente, die am Tretlagergetriebe angeordnet sind und die Drehzahl der vom Benutzer mit Muskelkraft angetriebenen Tretkurbel und/oder das vom Benutzer eingebrachte Antriebs- bzw. Eingangsdrehmoment erfassen. Zudem kann ein Ausgangsdrehmoment bzw. ein Abtriebsdrehmoment bzw. das Gesamtantriebsdrehmoment am Tretlagergetriebe erfasst werden. Des Weiteren kann die Sensorik auch Sensorelemente umfassen, die an der wenigstens einen Tretkurbel des Fahrrads angeordnet sind, um eine Kurbelposition bzw. einen Kurbeldrehwinkel der jeweiligen Tretkurbel zu bestimmen. Beispielsweise umfasst die Sensorik vorzugsweise zumindest einen Lagesensor, einen Drehwinkelsensor, einen Wegsensor, einen Drehmomentsensor und/oder einen Drehzahlsensor.

Unter antriebsspezifischen Sensordaten sind eine Drehzahl einer Antriebswelle des Hilfsantriebs und/oder der Tretkurbelwelle, ein Eingangsdrehmoment des Hilfsantriebs und/oder der Tretkurbelwelle, ein Abtriebsdrehmoment des Tretlagergetriebes, eine Kurbelposition der jeweiligen Tretkurbel und/oder eine aktuelle Gangstufe des Tretlagergetriebes zu verstehen, wobei diese Zustandsgrößen durch einen der Sensorelemente oder durch Kombination von mehreren Sensorelementen erfassbar sind.

Das Tretkurbelgetriebe ist mittels der Schalteinrichtung schaltbar, wobei ein Schaltbefehl von der Auswerte- und Steuereinrichtung berechnet und an die Schalteinrichtung übermittelt wird. Die Berechnung des Schaltbefehls erfolgt durch Ermittlung eines optimalen Schaltzeitpunkts der Schalteinrichtung ermittelt wird und ein Schaltvorgang des Tretkurbelgetriebes durch einen entsprechenden Befehl an die Schalteinrichtung entsprechend umgesetzt bzw. ausgeführt wird. Mit anderen Worten besteht die Steuerung der Schalteinrichtung unter anderem in der Durchführung eines Wechsels von einer Gangstufe in eine andere Gangstufe, wobei das Tretkurbelgetriebe vorzugsweise mehrere Gangstufen umfasst. Der optimale Schaltzeitpunkt für den Übersetzungswechsel wird von der Auswerte- und Steuereinrichtung vorzugsweise permanent berechnet. Unter der jeweiligen Gangstufe ist in diesem Zusammenhang eine bestimmte Übersetzung des Tretkurbelgetriebes zu verstehen, wobei durch einen Gangwechsel in bekannter Weise von einer Gangstufe mit einer ersten Übersetzung in eine andere Gangstufe mit einer höheren bzw. einer niedrigeren Übersetzung gewechselt wird.

Infolge des Schaltbefehls wird ein Gangwechsel von einer ersten Gangstufe mit einer ersten Übersetzung des Tretlagergetriebes in eine zweite Gangstufe mit einer zweiten Übersetzung eingeleitet. Bei Gangwechseln können Drehmomentspitzen auftreten, die zu hohem Verschleiß und deshalb zu einer kürzeren Lebensdauer der im Leistungsfluss befindlichen Bauteile der Antriebsvorrichtung führen können. Um den Verschleiß zu reduzieren, werden die von der Sensorik erfassten antriebsspezifischen Zustandsgrößen verwendet, um einen Gangwechsel durch Ermittlung eines optimalen Schaltzeitpunkts möglichst lastfrei und materialschonend zu gestalten.

Dazu wird beispielsweise die genaue Position bzw. der genaue Drehwinkel der jeweiligen Tretkurbel oder der Tretkurbelwelle bestimmt. Anhand dieser Geometriedaten sowie unter Berücksichtigung der vorliegenden Antriebsdrehmomente kann von der Auswerte- und Steuereinrichtung für jede Gangstufe der genaue Zeitpunkt bzw. ein exakter Schaltweg bestimmt werden, ab wann der Gangwechsel mittels der Schalteinrichtung zu erfolgen hat. Dadurch können die Schaltvorgänge besonders verschleißarm realisiert werden.

Jede Tretkurbel ist zum mit Muskelkraft erfolgenden Antrieb des Fahrradantriebs um 360° drehbar bzw. manuell drehantreibbar, wobei eine Tretkurbelposition der Tretkurbel von 0° dann vorliegt, wenn die erste Tretkurbel ausgehend von der Pedalachse bzw. der Tretkurbelwelle vertikal nach oben absteht. Gleichzeitig liegt die zweite Tretkurbel in bekannter Weise gegenüber zur ersten Tretkurbel bei einer Tretkurbelposition von 180° vor, also wenn die zweite Tretkurbel ausgehend von der Pedalachse bzw. der Tretkurbelwelle vertikal nach unten absteht. Bei einer jeweiligen Tretkurbelposition von 0° bzw. 180° ist mangels Hebelarmes nur ein minimales Drehmoment durch die Tretkurbeln auf das Tretlagergetriebe übertragbar. Mithin liegt nur ein geringfügiges aus Muskelkraft resultierendes Antriebsdrehmoment am Tretkurbelgetriebe an.

Bei einer Vorwärtsfahrt des Fahrrades wird das erste Pedal vom Benutzer derart angetreten, dass die damit verbundene erste Tretkurbel aufgrund der darauf einwirkenden Schubbelastung durch den Benutzer in Fahrtrichtung nach vorne verschwenkt. Bei einer Tretkurbelposition von 90°, also wenn die erste Tretkurbel horizontal in Fahrtrichtung nach vorne ausgerichtet ist, ist der Hebelarm am größten, sodass bei konstanter Tretkraft des Benutzers bei der Tretkurbelposition von 90° ein erstes maximales Drehmoment auf das Tretkurbelgetriebe einwirkt. Gleichzeitig verschwenkt die zweite Tretkurbel nach hinten von einer Tretkurbelposition von 180° zu einer Tretkurbelposition von 270°, wobei dabei auf die zweite Tretkurbel eine Zugbelastung durch den Benutzer einwirkt, die bei der Tretkurbelposition von 270° ein zweites maximales Drehmoment erzeugt. Die Zugbelastung kann insbesondere dann eingebracht werden, wenn die Beine des Benutzers mit den Pedalen der Tretkurbeln wirkverbunden sind. Dies kann beispielsweise durch fest mit den Pedalen verbundene Schuhe erfolgen. Somit kann ein optimaler Schaltzeitpunkt insbesondere dann gegeben sein, wenn die Tretkurbeln aufgrund des geringen Antriebsdrehmoments in oder bei einer Tretkurbelposition von 0° bzw. 180° vorliegen. Anders gesagt ist ein optimaler Schaltzeitpunkt insbesondere dann gegeben, wenn ein Gangwechsel besonders lastarm, im Optimalfall lastfrei eingeleitet und durchgeführt werden kann.

Vorzugsweise ist die Auswerte- und Steuereinrichtung dazu ausgebildet, ein Eingangsdrehmoment des elektrischen Hilfsantriebs zu steuern. Unter einer Steuerung des Eingangsdrehmoments des elektrischen Hilfsantriebs ist ein Motoreingriff zu verstehen, bei dem das Eingangsdrehmoment des Rotors erhöht oder reduziert wird. Insbesondere wird während des Schaltvorgangs ein Gegenmoment an der Antriebsseite des Tretlagergetriebes erzeugt, welches vorteilhafterweise so hoch ist, wie das Muskelkraftmoment an der Tretkurbelwelle. Mithin wird das Tretlagergetriebe in einen annähernd lastfreien Zustand versetzt, sodass der Schaltvorgang möglichst schonend erfolgt. Die Auswerte- und Steuereinrichtung ist nach Eingang des Schaltbefehles und vor der Einleitung des Schaltvorgangs folglich in der Lage, ein Antriebsdrehmoment des elektrischen Hilfsantriebs anzupassen, um den Schaltvorgang möglichst lastfrei zu gestalten.

Bevorzugt wird ein Eingangsdrehmoment des elektrischen Hilfsantriebs während des Schaltvorganges reduziert. Insbesondere wenn eine Tretkurbelposition der Tretkurbeln von 0° bzw. 180° vorliegt, kann das Eingangsdrehmoment des Hilfsantriebs vor oder während des Schaltvorgangs zusätzlich reduziert werden. Dadurch wird der Schaltvorgang lastfrei gestaltet. Zudem kann ein Zeitpunkt für das anschließende Erhöhen des Eingangsdrehmoments des elektrischen Hilfsantriebs ermittelt werden. Anders gesagt kann ein Zeitpunkt für einen erneuten Motoreingriff des Hilfsantriebs angepasst werden.

Gemäß einer bevorzugten Ausführungsform umfasst die Antriebsvorrichtung ferner Eingabemittel, wobei die Auswerte- und Steuereinrichtung dazu eingerichtet ist, über die Eingabemittel Benutzereingaben zu erfassen. Unter Benutzereingaben sind jegliche Eingaben eines Benutzers zu verstehen, die eine Kommunikation mit der Schalteinrichtung und/oder mit der Auswerte- und Steuereinheit ermöglichen. Die Benutzereingabe kann beispielsweise die Veränderung einer Übersetzung durch Hoch- oder Herunterschalten eines Ganges sein, also ein manueller Schaltbefehl.

Beispielsweise weisen die Eingabemittel mindestens eine Schaltwippe und/oder mindestens eine Betätigungstaste für die Benutzereingaben auf. Die mindestens eine Schaltwippe ist am Fahrradlenker angeordnet und bevorzugt dazu eingerichtet, in einem "Shift-by-Wire-System" betrieben zu werden, sodass die mindestens eine Schaltwippe über eine Steuerleitung mit der Schalteinrichtung verbunden ist und durch den Benutzer mit der Hand oder einem Finger bzw. Daumen betätigbar ist, um die Übersetzung am Tretlagergetriebe manuell zu wählen. Alternativ ist auch eine mechanische Verbindung zwischen Schaltwippe und Schalteinrichtung über Zugmittel denkbar. Diese Verbindung wird insbesondere mittels der Auswerte- und Steuereinrichtung überwacht und ausgewertet, um auch im Rahmen des Automatikbetriebs der Schalteinrichtung verwendet zu werden. Alternativ oder ergänzend zur Schaltwippe sind mindestens eine, optional zweie Betätigungstasten zur Übersetzungsänderung durch Drücken am Fahrradlenker angeordnet, wobei die eine Betätigungstaste zum Runterschalten und die andere Betätigungstaste zum Hochschalten mindestens eines Ganges vorgesehen ist. Bevorzugt sind diese Betätigungstasten derart ausgeführt, dass die Betätigung der jeweiligen Betätigungstaste mindestens zwei Rastierungen aufweist. Drückt der Benutzer einen der beiden Tasten nur bis zur ersten Rastierung, wird nur ein Gang hoch- bzw. heruntergeschaltet. Drückt der Benutzer dieselbe Taste vollständig bis zur mindestens zweiten Rastierung durch, werden zwei oder mehr Gänge geschaltet. Wie viele Gänge geschaltet werden sollen, kann beispielsweise in der Auswerte- und Steuereinrichtung, die die Schaltbefehle entgegennimmt und an die Schalteinrichtung weiterleitet, eingestellt werden. Bevorzugt ist eine zeitlich lange Betätigung einer der beiden Betätigungstasten dazu eingerichtet, einen Anfahrgang zu wählen, der über die Auswerte- und Steuereinrichtung beliebig eingestellt werden kann. Insbesondere ist der Anfahrgang besonders niedrig, sodass das Anfahren für den Benutzer erleichtert wird.

Bevorzugt ist ein Smartphone als Eingabemittel vorgesehen, wobei die Auswerte- und Steuereinrichtung dazu eingerichtet ist, über das Smartphone Benutzereingaben zu erfassen. Beispielsweise kann der Benutzer eine gewünschte Trittfrequenz, Leistung oder Geschwindigkeit am Eingabemittel einstellen, sodass die Auswerte- und Steuereinrichtung automatisiert die richtige Übersetzung wählt, um den Vorgaben des Benutzers zu entsprechen. Ferner ist neben der Übersetzungseinstellung auch eine Variation der Motorleistung am optionalen elektrischen Hilfsantrieb denkbar.

Vorzugsweise ist ein Ansteuerungsverhalten der Schalteinrichtung über die Auswerte- und Steuereinrichtung durch Benutzereingaben adaptierbar. Beispielsweise weist die Auswerte- und Steuereinrichtung Lernalgorithmen auf, um bei wiederholt auftretendem Fahrverhalten des Benutzers bzw. bei Schaltkorrekturen durch den Benutzer eine schrittweise Annäherung an das vom Benutzer in der jeweiligen Situation Gewollte vorzunehmen. Wird beispielsweise von der Auswerte- und Steuereinrichtung ein Gang an dem Tretlagergetriebe über die Schalteinrichtung gewählt und geschaltet, kurz darauf jedoch vom Benutzer per manueller Schaltung korrigiert, dann wird dies von der Auswerte- und Steuereinrichtung erkannt und in einem Fahrprofil abgespeichert, um bei Wiederholungen dieser Situation eine automatische an dem Benutzer angepasste Schaltanpassung vorzunehmen.

Bevorzugt ist die Auswerte- und Steuereinrichtung dazu eingerichtet, über die Eingabemittel den Benutzer zu identifizieren. Vorzugsweise erfolgt die Identifizierung des Benutzers berührungslos entweder über die Identifikation des Smartphones beispielsweise mittels Bluetooth MAC Adresse oder über einen Schlüssel mit Mikrochip, den der Benutzer trägt, oder über einen Fingerabdrucksensor oder über die Eingabe eines Codes oder durch Nutzung einer speziellen Applikation auf einem Smartphone, das kabellos mit der Auswerte- und Steuereinrichtung verbunden ist. Bevorzugt wird über das Smartphone das gewünschte Fahrprofil vom Benutzer angepasst. Dadurch können Fahrprofile für die Bedürfnisse und Vorlieben unterschiedlicher Benutzer abgespeichert werden.

Ferner bevorzugt ist die Auswerte- und Steuereinrichtung dazu eingerichtet, im Stillstand oder an einem Hang eine vergleichsweise hohe Übersetzung am Tretlagergetriebe einzustellen, um das Anfahren für den Benutzer zu erleichtern. Unter der Einstellung einer vergleichsweise hohen Übersetzung ist zu verstehen, dass die Übersetzung mit abnehmender Geschwindigkeit oder im Stillstand erhöht wird, sodass bei einem Stillstand des Fahrrades eine hohe Übersetzung vorliegt. Mithin entspricht eine hohe Übersetzung bzw. kurze Übersetzung einem kleinen Gang. Eine niedrige Übersetzung ist somit eine lange Übersetzung und entspricht einem großen Gang. Die hohe Übersetzung kann vorzugsweise eine maximale, also eine größtmögliche Übersetzung sein, bevorzugt dann, wenn das Fahrrad an einem Hang steht. Die Hanglage bzw. Position und Ausrichtung des Fahrrades wird vorteilhafterweise über die Sensorik erfasst. Demgegenüber kann in einem vergleichsweise höheren Gang geschaltet werden, wenn das Fahrrad an einem Gefälle steht. Mit anderen Worten kann eine vergleichsweise niedrige Übersetzung im Gefälle eingestellt werden. Durch die positions- und geschwindigkeitsabhängige Anpassung der Übersetzung erfährt der Benutzer einen besonderen Komfort. Ferner ist neben der Übersetzungseinstellung auch eine Variation der Motorleistung des optionalen elektrischen Hilfsantriebs zumindest am Hang oder beim Anfahren denkbar.

Bevorzugt ist die Sensorik dazu eingerichtet, benutzerspezifische Sensordaten über den Zustand des Benutzers zu generieren und zur Auswertung an die Auswerte- und Steuereinrichtung zu übermitteln, wobei die Auswerte- und Steuereinrichtung dazu eingerichtet ist, in Abhängigkeit dieser benutzerspezifischen Sensordaten eine Übersetzung des Tretlagergetriebes einzustellen. Unter dem Zustand des Benutzers sind beispielsweise Vitalfunktionen wie ein Puls oder ein Erschöpfungsgrad zu verstehen. Ferner ist neben der Übersetzungseinstellung auch eine Variation der Motorleistung des optionalen elektrischen Hilfsantriebs zumindest in Abhängigkeit dieser benutzerspezifischen Sensordaten denkbar. Die benutzerspezifischen Sensordaten werden insbesondere durch sogenannte "HMI-Sensoren" (Human Machine Interface), beispielsweise durch Pulsmessung mittels Pulsuhr oder Brustgurt, optional durch Blutdruckmessung, Blutzuckermessung und/oder Messung des Sauerstoffgehalts ausgeführt. Dadurch kann der Benutzer in einem bestimmten Herzfrequenz-Bereich oder nach einem bestimmten Profil trainieren, wobei die Übersetzung am Tretlagergetriebe automatisiert eingestellt wird. Steigt die Belastung wird die Übersetzung reduziert bzw. optional Motorleistung des elektrischen Hilfsantriebs zur Unterstützung eingeleitet.

Gemäß einer bevorzugten Ausführungsform umfasst die Antriebsvorrichtung ferner eine Anzeigevorrichtung, die dazu eingerichtet ist, zumindest antriebsspezifische Anzeigedaten für den Benutzer zu visualisieren. Beispielsweise ist die Anzeigevorrichtung ein optischer Bildschirm, der an dem Fahrradlenker angeordnet und dazu eingerichtet ist, zumindest die Geschwindigkeit, die Ganganzeige und eine Anzeige der Antriebseffizienz darzustellen. Als Belohnung oder Anreiz für den Benutzer sind die Anzeige von gewonnenen Höhenmetern oder einer zusätzlichen Strecke aufgrund einer effizienten Schaltung vorteilhaft. Für ein automatisiertes Effizienzprogramm ist insbesondere die Anzeige des Belohnungssystems vorteilhaft, weil diese die Motivation des Benutzers erhöhen kann. Insbesondere kann die Anzeigevorrichtung auch Fahrprofile darstellen oder auf eine Systemüberlastung bzw. auf eine Überlastung einzelner Komponenten hinweisen.

Bei einem erfindungsgemäßen Verfahren zur Steuerung einer Antriebsvorrichtung für ein zumindest mit Muskelkraft angetriebenes Fahrrad, wobei die Antriebsvorrichtung eine automatisierte Schalteinrichtung mit einem Aktuator und mit einer Schaltwalze sowie ein Tretlagergetriebe umfasst, wird eine Übersetzung des Tretlagergetriebes mittels der Schalteinrichtung automatisiert eingestellt, wobei das Tretlagergetriebe zumindest mit einem Antriebsdrehmoment von einem Benutzer über mindestens eine mit einer Tretkurbelwelle wirkverbundene Tretkurbel beaufschlagt wird, wobei die Antriebsvorrichtung ferner umfasst eine Auswerte- und Steuereinrichtung sowie eine Sensorik, die zumindest antriebsspezifische Sensordaten generiert und an die Auswerte- und Steuereinrichtung übermittelt, wobei die Auswerte- und Steuereinrichtung die Schalteinrichtung zumindest in Abhängigkeit der antriebsspezifischen Sensordaten automatisiert ansteuert.

Vorzugsweise wird ein Ansteuerungsverhalten der Schalteinrichtung über die Auswerte- und Steuereinrichtung durch Benutzereingaben adaptiert. Mit anderen Worten kann der Benutzer eine Anpassung der Übersetzung durch Eingabe vornehmen, wobei die Auswerte- und Steuereinrichtung Benutzereingaben abspeichert, auswertet und die Ansteuerung der Schalteinrichtung anpasst. Insbesondere weist die Auswerte- und Steuereinrichtung einen lernfähigen Algorithmus auf.

Bevorzugt stellt die Auswerte- und Steuereinrichtung im Stillstand oder an einem Hang eine vergleichsweise hohe Übersetzung am Tretlagergetriebe ein, um das Anfahren für den Benutzer zu erleichtem. Dadurch wird der Komfort beim Anfahren erheblich erhöht. Unterstützend kann neben der Übersetzungsanpassung ein elektrischer Hilfsantrieb hinzugeschaltet werden. Der elektrische Hilfsantrieb umfasst eine elektrische Maschine mit einem Stator und einem Rotor.

Ferner bevorzugt generiert die Sensorik benutzerspezifische Sensordaten über den Zustand des Benutzers und übermittelt diese zur Auswertung an die Auswerte- und Steuereinrichtung, wobei die Auswerte- und Steuereinrichtung in Abhängigkeit dieser benutzerspezifischen Sensordaten eine Übersetzung des Tretlagergetriebes einstellt. Mithin steuert die Auswerte- und Steuereinrichtung die Schalteinrichtung nicht nur in Abhängigkeit der antriebsspezifischen Sensordaten automatisiert, sondern auch in Abhängigkeit der benutzerspezifischen Sensordaten. Beispielsweise kann dadurch der Benutzer unabhängig von dem realen Streckenprofil durch automatisierte Einstellung der Übersetzung am Tretlagergetriebe mittels Auswerte- und Steuereinrichtung stets in einem für ihn optimalen oder gewünschten Pulsbereich trainieren.

Ferner betrifft die Erfindung ein Fahrrad, umfassend eine erfindungsgemäße Antriebsvorrichtung. Insbesondere ist das Fahrrad als E-Bike oder Pedelec ausgebildet und umfasst mindestens ein Hinterrad und mindestens ein Vorderrad. Der mit Muskelkraft erfolgende Antrieb des E-Bikes bzw. Pedelecs wird zumindest teilweise von einem elektrischen Hilfsantrieb unterstützt, um den Benutzer zu entlasten. Eine vollständige Übernahme des Fahrradantriebs durch den Hilfsantrieb ist zumindest temporär möglich.

Im Folgenden wird ein Ausführungsbeispiel der Erfindung anhand der schematischen Zeichnungen näher erläutert, wobei gleiche oder ähnliche Elemente mit dem gleichen Bezugszeichen versehen sind. Hierbei zeigt
- Fig. 1: eine schematische Darstellung eines Fahrrads mit einer erfindungsgemäßen Antriebsvorrichtung,
- Fig. 2: eine schematische Darstellung der erfindungsgemäßen Antriebsvorrichtung gemäß Fig. 1.

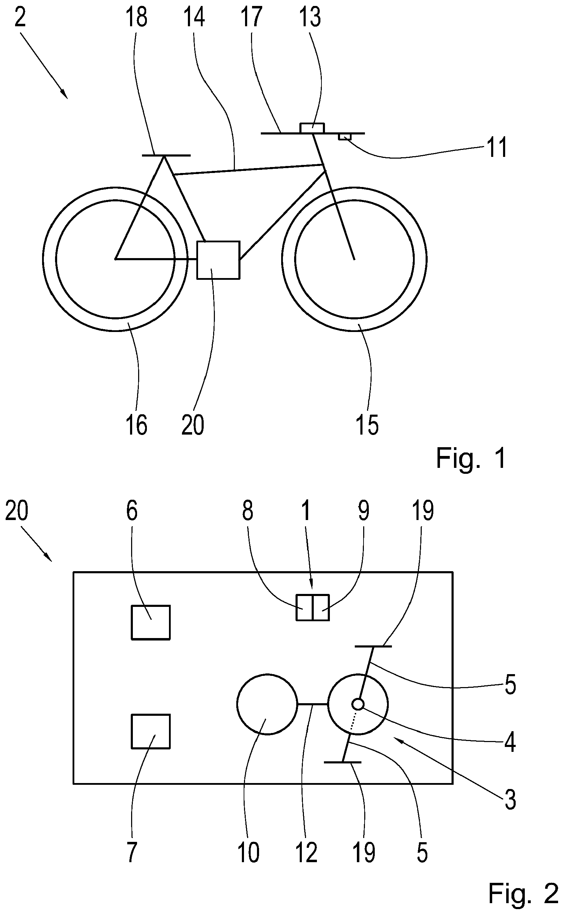

Ein erfindungsgemäßes Fahrrad 2 ist in Fig. 1 stark vereinfacht dargestellt. Das Fahrrad 2 weist einen Rahmen 14 auf, an dem ein Vorderrad 15, ein Hinterrad 16, ein Fahrradlenker 17 und ein Sattel 18 angeordnet sind. Ferner weist das Fahrrad 2 eine Antriebsvorrichtung 20 auf, die dazu eingerichtet ist, das Fahrrad 2 zumindest mit einer Muskelkraft eines hier nicht dargestellten Benutzers anzutreiben. Ferner sind an dem Fahrradlenker 17 Eingabemittel 11 angeordnet, die der Benutzer zur Eingabe verwenden kann. Vorliegend sind die Eingabemittel 11 als Betätigungstasten ausgebildet, wobei eine erste Betätigungstaste zum Runterschalten eines Ganges und eine zweite Betätigungstaste zum Hochschalten eines Ganges vorgesehen sind. An dem Fahrradlenker 17 ist ferner auch eine optische Anzeigevorrichtung 13 angeordnet, die dazu eingerichtet ist, zumindest antriebsspezifische Anzeigedaten, insbesondere eine Gangstufe und eine Geschwindigkeit für den Benutzer zu visualisieren.

Gemäß Fig. 2 ist die Antriebsvorrichtung 20 vergrößert jedoch stark vereinfacht dargestellt. Die Antriebsvorrichtung 20 umfasst eine automatisierte Schalteinrichtung 1 mit einem Aktuator 8 und mit einer Schaltwalze 9 sowie ein Tretlagergetriebe 3 und einen elektrischen Hilfsantrieb 10. Eine Übersetzung des Tretlagergetriebes 3 ist mittels der Schalteinrichtung 1 automatisiert einstellbar. Der elektrische Hilfsantrieb 10 ist dazu eingerichtet, das Tretlagergetriebe 3 mit einem zusätzlichen Antriebsdrehmoment zu beaufschlagen. Das Tretlagergetriebe 3 ist dazu eingerichtet, sowohl mit einem Antriebsdrehmoment von einem Benutzer als auch mit einem Antriebsdrehmoment des elektrischen Hilfsantriebs 10 beaufschlagt zu werden.

Zum Einbringen des Antriebsdrehmoments vom Benutzer tritt der Benutzer in Pedalen 19, die über Tretkurbeln 5 mit einer Tretkurbelwelle 4 verbunden sind, wobei die Tretkurbelwelle 4 mit dem Tretlagergetriebe 3 verbunden ist. Zum Einbringen des Antriebsdrehmoments des elektrischen Hilfsantriebs 10 treibt ein Rotor des elektrischen Hilfsantriebs 10 eine Welle 12 an, die mit dem Tretlagergetriebe 3 verbunden ist.

Ferner umfasst die Antriebsvorrichtung 20 eine Auswerte- und Steuereinrichtung 6 sowie eine Sensorik 7. Die Sensorik 7 weist mehrere nicht näher dargestellte Sensorelemente auf und ist dazu eingerichtet, antriebsspezifische Sensordaten über den Zustand des Fahrrads 2 und optional auch benutzerspezifische Sensordaten über den Zustand des Benutzers zu generieren. Die von der Sensorik 7 generierten Sensordaten werden an die Auswerte- und Steuereinrichtung 6 übermittelt, wobei die Auswerte- und Steuereinrichtung 6 in Abhängigkeit der antriebsspezifischen Sensordaten und optional auch in Abhängigkeit der benutzerspezifischen Sensordaten die Schalteinrichtung 1 automatisiert ansteuert und eine Übersetzung des Tretlagergetriebes 3 einstellt. Benutzerspezifische Sensordaten werden beispielsweise über eine Pulsuhr generiert.

Ferner bestimmt die Auswerte- und Steuereinrichtung 6 in Abhängigkeit der antriebsspezifischen Sensordaten einen optimalen Schaltzeitpunkt und steuert die Schalteinrichtung 6 in Abhängigkeit des optimalen Schaltzeitpunkts. Die Auswerte- und Steuereinrichtung 6 ist datenübertragend mit den Eingabemitteln 11 verbunden, um Benutzereingaben zu erfassen. Vorliegend ist ein Ansteuerungsverhalten der Schalteinrichtung 1 über die Auswerte- und Steuereinrichtung 6 durch Benutzereingaben adaptierbar. Mit anderen Worten ist die Auswerte- und Steuereinrichtung 6 dazu eingerichtet, Schaltvorgänge in bestimmten Schaltsituationen beispielsweise durch Schaltkorrekturen vom Benutzer zu erlernen. Um das jeweilige Fahrprofil dem jeweiligen Benutzer zuzuordnen, ist die Auswerte- und Steuereinrichtung 6 dazu eingerichtet, den Benutzer zu identifizieren, beispielsweise über die Eingabemittel 11. Insbesondere werden weitere Eingabemittel, beispielsweise ein Smartphone mit der Auswerte- und Steuereinrichtung 6 kabellos sowie zur Datenübertragung verbunden. Über das Smartphone kann der Benutzer die Auswerte- und Steuereinrichtung 6 beispielsweise konfigurieren. Beispielswies ist die Auswerte- und Steuereinrichtung 6 dazu eingerichtet, im Stillstand oder an einem Hang eine vergleichsweise hohe Übersetzung am Tretlagergetriebe 3 einzustellen, um das Anfahren für den Benutzer zu erleichtern. Den Anfahrgang mit der vergleichsweise hohen Übersetzung kann der Benutzer beispielsweise über das Smartphone einstellen.

### Bezugszeichen

- 1: Schalteinrichtung
- 2: Fahrrad
- 3: Tretlagergetriebe
- 4: Tretkurbelwelle
- 5: Tretkurbel
- 6: Auswerte- und Steuereinrichtung
- 7: Sensorik
- 8: Aktuator
- 9: Schaltwalze
- 10: elektrischer Hilfsantrieb
- 11: Eingabemittel
- 12: Welle
- 13: Anzeigevorrichtung
- 14: Rahmen
- 15: Vorderrad
- 16: Hinterrad
- 17: Fahrradlenker
- 18: Sattel
- 19: Pedal
- 20: Antriebsvorrichtung

## Patentansprüche

1. Antriebsvorrichtung für ein zumindest mit Muskelkraft angetriebenes Fahrrad (2), umfassend eine automatisierte Schalteinrichtung (1) mit einem Aktuator (8) und mit einer Schaltwalze (9) sowie ein Tretlagergetriebe (3), dessen Übersetzung mittels der Schalteinrichtung (1) automatisiert einstellbar ist, wobei das Tretlagergetriebe (3) dazu eingerichtet ist, zumindest mit einem Antriebsdrehmoment von einem Benutzer über mindestens eine mit einer Tretkurbelwelle (4) wirkverbundene Tretkurbel (5) beaufschlagt zu werden, ferner umfassend eine Auswerte- und Steuereinrichtung (6) sowie eine Sensorik (7), wobei die Sensorik (7) dazu eingerichtet ist, zumindest antriebsspezifische Sensordaten zu generieren und an die Auswerte- und Steuereinrichtung (6) zu übermitteln, wobei die Auswerte- und Steuereinrichtung (6) dazu eingerichtet ist, die Schalteinrichtung (1) zumindest in Abhängigkeit der antriebsspezifischen Sensordaten automatisiert anzusteuern.

2. Antriebsvorrichtung nach Anspruch 1, ferner umfassend einen elektrischen Hilfsantrieb (10), der dazu eingerichtet ist, das Tretlagergetriebe (3) mit einem zusätzlichen Antriebsdrehmoment zu beaufschlagen.

3. Antriebsvorrichtung nach Anspruch 1 oder 2, wobei die Auswerte- und Steuereinrichtung (6) dazu eingerichtet ist, in Abhängigkeit der antriebsspezifischen Sensordaten einen optimalen Schaltzeitpunkt zu bestimmen und die Schalteinrichtung (6) in Abhängigkeit des optimalen Schaltzeitpunkts zu steuern.

4. Antriebsvorrichtung nach einem der vorherigen Ansprüche, ferner umfassend Eingabemittel, wobei die Auswerte- und Steuereinrichtung (6) dazu eingerichtet ist, über die Eingabemittel Benutzereingaben zu erfassen.

5. Antriebsvorrichtung nach Anspruch 4, wobei die Eingabemittel (11) mindestens eine Schaltwippe und/oder mindestens eine Betätigungstaste für eine Benutzereingabe aufweisen.

6. Antriebsvorrichtung nach Anspruch 4 oder 5, wobei ein Ansteuerungsverhalten der Schalteinrichtung (1) über die Auswerte- und Steuereinrichtung (6) durch Benutzereingaben adaptierbar ist.

7. Antriebsvorrichtung nach Anspruch 4 bis 6, wobei die Auswerte- und Steuereinrichtung (6) dazu eingerichtet ist, über die Eingabemittel den Benutzer zu identifizieren.

8. Antriebsvorrichtung nach einem der vorherigen Ansprüche, wobei die Auswerte- und Steuereinrichtung (6) dazu eingerichtet ist, im Stillstand oder an einem Hang eine vergleichsweise hohe Übersetzung am Tretlagergetriebe (3) einzustellen, um das Anfahren für den Benutzer zu erleichtern.

9. Antriebsvorrichtung nach einem der vorherigen Ansprüche, wobei die Sensorik (7) dazu eingerichtet ist, benutzerspezifische Sensordaten über den Zustand des Benutzers zu generieren und zur Auswertung an die Auswerte- und Steuereinrichtung (6) zu übermitteln, wobei die Auswerte- und Steuereinrichtung (6) dazu eingerichtet ist, in Abhängigkeit dieser benutzerspezifischen Sensordaten eine Übersetzung des Tretlagergetriebes (3) einzustellen.

10. Antriebsvorrichtung nach einem der vorherigen Ansprüche ferner umfassend eine Anzeigevorrichtung (13), die dazu eingerichtet ist, zumindest antriebsspezifische Anzeigedaten für den Benutzer zu visualisieren.

11. Verfahren zur Steuerung einer Antriebsvorrichtung für ein zumindest mit Muskelkraft angetriebenes Fahrrad (2), wobei die Antriebsvorrichtung eine automatisierte Schalteinrichtung (1) mit einem Aktuator (8) und mit einer Schaltwalze (9) sowie ein Tretlagergetriebe (3) umfasst, dessen Übersetzung mittels der Schalteinrichtung (1) automatisiert eingestellt wird, wobei das Tretlagergetriebe (3) zumindest mit einem Antriebsdrehmoment von einem Benutzer über mindestens eine mit einer Tretkurbelwelle (4) wirkverbundene Tretkurbel (5) beaufschlagt wird, die Antriebsvorrichtung ferner umfassend eine Auswerte- und Steuereinrichtung (6) sowie eine Sensorik (7), die zumindest antriebsspezifische Sensordaten generiert und an die Auswerte- und Steuereinrichtung (6) übermittelt, wobei die Auswerte- und Steuereinrichtung (6) die Schalteinrichtung (1) zumindest in Abhängigkeit der antriebsspezifischen Sensordaten automatisiert ansteuert.

12. Verfahren nach Anspruch 11, wobei ein Ansteuerungsverhalten der Schalteinrichtung (1) über die Auswerte- und Steuereinrichtung (8) durch Benutzereingaben adaptiert wird.

13. Verfahren nach Anspruch 11 oder 12, wobei die Auswerte- und Steuereinrichtung (6) im Stillstand oder an einem Hang eine vergleichsweise hohe Übersetzung am Tretlagergetriebe (3) einstellt, um das Anfahren für den Benutzer zu erleichtern.

14. Verfahren nach Anspruch 11 bis13, wobei die Sensorik (7) benutzerspezifische Sensordaten über den Zustand des Benutzers generiert und zur Auswertung an die Auswerte- und Steuereinrichtung (6) übermittelt, wobei die Auswerte- und Steuereinrichtung (6) in Abhängigkeit dieser benutzerspezifischen Sensordaten eine Übersetzung des Tretlagergetriebes (3) einstellt.

15. Fahrrad, umfassend eine Antriebsvorrichtung nach einem der Ansprüche 1 bis 10.
